# EUROPÄISCHE PATENTANMELDUNG

(11) **EP 4 792 695 A1**
(43) Veröffentlichungstag der Anmeldung: **19.08.2026**
(21) Anmeldenummer: 26158197.9
(22) Anmeldetag: 12.02.2026
(51) Int. Cl.: A47J 31/44

(54) **VORRICHTUNG ZUM AUFSCHÄUMEN VON FLÜSSIGKEITEN, KAFFEEVOLLAUTOMAT UND VERFAHREN ZUM ZUBEREITEN VON KAFFEEGETRÄNKEN**

(30) Priorität: 17.02.2025 DE 102025105849
(71) Anmelder: Melitta Europa GmbH & Co. KG, 32427 Minden (DE)
(72) Erfinder: BÖCKMANN, Nils, 32049 Herford (DE); AUS DER FÜNTEN, Sandra, 33739 Bielefeld (DE); NEUHAUS, Sven, 32549 Bad Oeynhausen (DE)
(74) Vertreter: Dantz, Jan Henning

(57) **Zusammenfassung**

Vorrichtung (1) zum Aufschäumen von Flüssigkeiten, insbesondere Milch für Kaffee, wobei die Vorrichtung (1) einen Behälter (2) zur Aufnahme von Flüssigkeit aufweist und wobei die Vorrichtung (1) außerdem einen Antrieb (4) aufweist; wobei der Antrieb (4) dazu eingerichtet ist, einen in dem Behälter (2) angeordneten Quirl (3) anzutreiben; wobei der Quirl (3) mittels des Antriebs (4) rotierbar ist und die Flüssigkeit mittels des Quirls (3) in Bewegung versetzt wird, wenn der Behälter (2) weniger als bis zu einem Übertrittsfüllstand mit Flüssigkeit gefüllt ist und der Quirl (3) in eine erste Richtung rotiert wird, um die Flüssigkeit aufzuschäumen; wobei der Behälter (2) eine Ausgabevorrichtung (21) und einen Behälterboden (22) aufweist, wobei die Ausgabevorrichtung (21) einen Flüssigkeitsauslass (211) umfasst, der so ausgebildet ist, dass die Flüssigkeit nicht aus dem Flüssigkeitsauslass (211) austreten kann, wenn der Behälter (2) weniger als bis zu einem Übertrittsfüllstand mit Flüssigkeit gefüllt ist, und wenn der Quirl (2) in die erste Richtung rotiert bei Volumenzunahme der Flüssigkeit durch Aufschäumen diese nicht aus dem Flüssigkeitsauslass (211) austritt. Der ist Flüssigkeitsauslass (211) ist außerdem so angeordnet, dass die Flüssigkeit aus dem Flüssigkeitsauslass (211) austritt, wenn der Quirl (3) in eine zur ersten Richtung gegenläufige zweite Richtung rotiert.

## Beschreibung

Die vorliegende Erfindung betrifft eine Vorrichtung zum Aufschäumen von Flüssigkeiten, insbesondere Flüssigkeit für Kaffee oder heiße Schokolade, nach dem Oberbegriff des Anspruchs 1, einen Kaffeevollautomaten und ein Verfahren zum Zubereiten von Kaffeegetränken.

Zum Aufschäumen von Flüssigkeiten, wie für Kaffee, Hafermilch, Mandelmilch etc. in einem Behälter, wird üblicherweise eine an einer zur Kaffeezubereitung verwendeten Kaffeemaschine angeordnete Dampfdüse benutzt, die Wasserdampf unter Druck zu der Flüssigkeit zuführt. Bei diesen Vorrichtungen besteht unter anderem der Nachteil einer Verwässerung der Flüssigkeit durch die Dampfzuführung. Darüber hinaus gibt es Kaffeemaschinen, beziehungsweise Kaffeevollautomaten, mit einer Kombination aus Pumpe und Düse, die die Flüssigkeit je nach Bedarf aus einem Behälter einsaugen und mittels einer Schäumvorrichtung aufschäumen und die den so hergestellten Milchschaum durch einen Flüssigkeitsauslass direkt in einen Kaffeebecher einleiten können, wie es beispielsweise US 2017/303734 A1 zeigt. Insbesondere die hierbei notwendige Einsaugstruktur mit der Schäumvorrichtung muss jedoch aufwendig und häufig gereinigt werden, um Keimen vorzubeugen. Pumpen oder Dampfdüsen sind außerdem für gewöhnlich laut und verursachen störende Geräusche, insbesondere dort, wo sie besonders intensiv laufen. Diese Vorrichtungen haben außerdem zwar den Vorteil, dass die Flüssigkeit durch den Wasserdampf unmittelbar erwärmt wird, die Herstellung kalten Milchschaums gestaltet sich jedoch schwieriger.

Zur Vereinfachung der Reinigung wurden Milchschäumer entwickelt, die einen, durch einen manuellen oder elektrischen Antrieb, rotierbaren Quirl umfassen, der in die Flüssigkeit eintaucht und sie dort in Bewegung versetzt und aufschäumt. Einen solchen Gegenstand zeigt beispielsweise die EP 1 656 855 A1. Mittels dieser Vorrichtungen kann Flüssigkeit unmittelbar in einem Kaffeebecher aufgeschäumt werden, sowohl warm als auch kalt. Der Quirl kann einfach und hygienisch, beispielsweise in der Spülmaschine, gereinigt werden. Des Weiteren gibt es Vorrichtungen, die den Quirl unmittelbar in einem Behälter anordnen, in den die Flüssigkeit einfüllbar ist, wobei der Behälter die Milch, während der Quirl zum Aufschäumen rotiert, erwärmen kann. Ein Nachteil dieser Vorrichtungen ist ein erhöhter Platzverbrauch im Vergleich zu den Dampfdüsen. Außerdem sind diese Vorrichtungen bisher zur Automatisierung des Zubereitungsvorgangs von Kaffee ungeeignet und nicht mit Kaffeevollautomaten kompatibel oder sie verwenden zusätzlich, wie beispielsweise von EP 2 570 060 A1 gezeigt, trotzdem eine Pumpe oder Dampfdüse zur Ausgabe der Flüssigkeit in den Kaffeebecher, was wiederum die Komplexität der Maschine, sowohl in der Herstellung als auch in der Pflege erhöht und die anderen oben genannten Nachteile hat.

Es ist somit Aufgabe der vorliegenden Erfindung, eine Vorrichtung zum Aufschäumen von Flüssigkeiten anzugeben, mittels der die vorstehenden Nachteile ausgeräumt werden können.

Die vorliegende Erfindung löst diese Aufgabe mit einer Vorrichtung zum Aufschäumen von Flüssigkeiten nach Anspruch 1, einem Kaffeevollautomaten nach Anspruch 12, sowie einem Verfahren nach Anspruch 15.

Erfindungsgemäß weist die Vorrichtung zum Aufschäumen von Flüssigkeiten, insbesondere Milch oder milchhaltige Flüssigkeiten für Kaffee oder heiße Schokolade, einen Behälter zur Aufnahme von Flüssigkeit und außerdem einen Antrieb auf, wobei der Antrieb dazu eingerichtet ist, einen in dem Behälter angeordneten Quirl anzutreiben. Der Quirl ist mittels des Antriebs rotierbar, sodass die Flüssigkeit mittels des Quirls in Bewegung versetzt wird, wenn der Quirl in eine erste Richtung rotiert wird, um die Flüssigkeit aufzuschäumen. Der Behälter umfasst einen Behälterboden und weist eine Ausgabevorrichtung auf, die einen Flüssigkeitauslass umfasst. Der Flüssigkeitsauslass ist so ausgebildet, dass die Flüssigkeit nicht aus dem Flüssigkeitsauslass austreten kann, wenn der Behälter weniger als bis zu einem Übertrittsfüllstand mit Flüssigkeit gefüllt ist und wenn der Quirl in die erste Richtung rotiert bei Volumenzunahme der Flüssigkeit durch Aufschäumen diese nicht aus dem Flüssigkeitsauslass austritt. Der Flüssigkeitsauslass ist dabei so angeordnet, dass die Flüssigkeit aus dem Flüssigkeitsauslass austritt, wenn der Quirl in eine zur ersten Richtung gegenläufige zweite Richtung rotiert. Hierdurch kann die Flüssigkeit vorteilhaft zur Herstellung von Schaum durch einen Quirl aufgeschäumt werden und gleichzeitig kann die Flüssigkeit, beziehungsweise die aufgeschäumte Flüssigkeit automatisch aus dem Behälter ausgegeben werden, ohne die oben genannten Nachteile einer Dampfdüse oder einer Pumpe. Bei einem Rotieren des Quirls in die erste Richtung entsteht eine Sperrfunktion und es wird vermieden, dass bei Volumenzunahme der Flüssigkeit durch Aufschäumen diese aus dem Flüssigkeitsauslass austritt, auch wenn das vergrößerte Volumen im Ruhezustand der zumindest teilweise geschäumten Flüssigkeit oberhalb des Übertrittsfüllstands liegen würde. Dabei wird beim Rotieren des Quirls in die erste Richtung die zumindest teilweise aufgeschäumte Flüssigkeit weg von dem Flüssigkeitsauslass gelenkt und dann durch das Drehen des Quirls in die zur ersten Richtung gegenläufige zweite Richtung zu dem Flüssigkeitsauslass hin gelenkt. Durch die Drehung des Quirls wird die zumindest teilweise geschäumte Flüssigkeit in ihrem Strömungsverhalten entsprechend beeinflusst. Zudem ist der Anteil der verwandten Bauteile gering und die Vorrichtung kann für einen Benutzer fast geräuschlos arbeiten.

Der Übertrittsfüllstand beschreibt insbesondere einen Füllstand mit Flüssigkeit im nicht aufgeschäumten und/oder im aufgeschäumten, also auch im teilweise aufgeschäumten Zustand, bei dem im Ruhezustand des Quirls kein Auslaufen aus dem Flüssigkeitsauslass erfolgt.

In einer besonders vorteilhaften Ausführungsform der vorliegenden Erfindung ist in dem Behälter neben dem Flüssigkeitsauslass ein Sperrelement ausgebildet, der so angeordnet ist, dass er den Strömungsweg der Flüssigkeit blockiert oder umleitet, sodass die Flüssigkeit besonders zuverlässig nicht aus dem Flüssigkeitsauslass austritt, wenn der Quirl in die erste Richtung rotiert. Diese Variante ermöglicht eine besonders platzsparende Ausbildung der Ausgabevorrichtung, da der Flüssigkeitsauslass so nicht vollständig oberhalb des Quirls angeordnet sein muss. Das Sperrelement muss in dieser Ausführungsform außerdem so angeordnet sein, dass die Flüssigkeit an dem Sperrelement vorbei aus dem Flüssigkeitsauslass austritt, wenn der Quirl in die zweite Richtung rotiert. Beispielsweise kann das Sperrelement hierfür in einem Randbereich des Umfangs des Quirls entgegen der ersten Richtung neben dem Flüssigkeitsauslass stationär in dem Behälter angeordnet sein. Optional kann das Sperrelement auch verstellbar ausgebildet sein. Eine Umleitung der Flüssigkeit mittels des Sperrelements kann besonders vorteilhaft durch eine Sperroberfläche verbessert werden, die beispielsweise eine im Wesentlichen in Richtung des Strömungswegs der Flüssigkeit bei Rotation des Quirls in die erste Richtung ausgerichtete Schräge sein kann. Bevorzugt ist das Sperrelement ein Steg, der optional auch dreieck- oder prismaförmig ausgebildet sein kann. Für ein besonders vorteilhaftes Leiten der Flüssigkeit weist der Sperrsteg etwa in der ersten Richtung eine Oberfläche mit einer Neigung von 30 ° zur Vertikalen auf.

An dem Behälter kann für eine einfache Bedienung der Vorrichtung mindestens eine Kennzeichnung zur Markierung des Übertrittfüllstandes aufweisen. Dieser Übertrittsfüllstand kann beispielsweise etwa ein Drittel des Gesamtvolumens des Behälters sein, vorzugsweise etwa 120 bis 140 ml bei einem Behältervolumen von etwa 350 bis 450 ml.

Der Antrieb umfasst bevorzugt eine Steuerung, die dazu eingerichtet ist, den Antrieb und somit den Quirl zu steuern und die außerdem dazu eingerichtet ist, den Antrieb so zu steuern, dass der Quirl zuerst für einen ersten Zeitraum in die erste Richtung rotiert und dass er anschließend, wenn die Flüssigkeit aufgeschäumt ist, für einen zweiten Zeitraum in die zweite Richtung rotiert. Auf diese kann der gesamte Prozess des Aufschäumens der Flüssigkeit ab dem Einfüllen in den Behälter, also des Herstellens von Milchschaum, und die Ausgabe der Ausgeschäumten Flüssigkeit durch die Ausgabevorrichtung vollautomatisch durgeführt werden. Nach Ablauf des zweiten Zeitraums ist der Behälter bevorzugt im Wesentlich leer.

Die Steuerung ist bevorzugt dazu eingerichtet den zweiten Zeitraum automatisiert zu beginnen, und/oder sie kann dazu eingerichtet sein, dass sie den zweiten Zeitraum nach einer Eingabe durch einen Benutzer beginnen kann. Die erste Variante ermöglicht eine Vollautomatische Bereitstellung der Flüssigkeit auf vorteilhafte Weise, letztere erhöht die Möglichkeiten des Benutzers zur Konfiguration. Die Steuerung kann den zweiten Zeitraum auch abhängig von einer Qualität der aufgeschäumten Flüssigkeit beginnen, die sie durch zu deren Überwachung konfigurierte Erfassungsmittel bestimmen kann.

Wenn ein Rotieren des Quirls in die erste Richtung beispielsweise dem Uhrzeigersinn entspricht und die erste Richtung der zweiten Richtung im Uhrzeigersinn entgegengesetzt ist, kann die Vorrichtung besonders einfach ausgeführt sein. Die Flüssigkeit wird auch in Bewegung versetzt, wenn der Quirl in die zweite Richtung rotiert, wobei sie durch Fliehkräfte in Richtung des Auslasses beschleunigt wird, sodass sie sowohl wegen der Volumenvergrößerung beim Aufschäumen als auch durch die Fliehkräfte durch die Rotation der Flüssigkeit aus dem Auslass austritt.

Eine Drehachse des Quirls kann bevorzugt im Wesentlichen horizontal ausgerichtet sein, um die Vorrichtung besonders platzsparend auszugestalten. Diese Ausrichtung ist außerdem für die Ausgabe der Milch, wenn der Quirl in die zweite Richtung rotiert, vorteilhaft. Insbesondere bei einer Anwendung der Vorrichtung an einem Kaffeevollautomaten ist dies von Vorteil, da diese oftmals bereits eine recht hohe Tiefe aufweisen und weniger tiefe Kaffeevollautomaten sich besonders für Anwendungen in kleinen Küchen anbieten. Für eine einfachere Aufschäumung der Flüssigkeit kann der Quirl aber auch mit geneigter oder vertikal ausgerichteter Drehachse ausgeführt sein, wobei dies die Anordnung des Flüssigkeitsauslasses erschwert. Eine gewisse Winkelung der Drehachse zur Horizontalen, beispielsweise im Bereich von etwa 10° bis 20° ist auch denkbar. In Richtung des Quirls kann der Behälterboden trichterförmig ausgebildet sein, um diesem die Milch, insbesondere die noch nicht aufgeschäumte Milch, zuführen zu können.

Der Behälter kann einen über dem Behälterboden angeordneten Behälterkörper umfassen, wobei der Behälterboden, der Behälterkörper und die Ausgabevorrichtung integral oder als einzelne Bauteile ausgebildet sein können. Dies vereinfacht eine Reinigung des Behälters, dessen Bauteile beispielsweise einfach in einer Spülmaschine waschbar sind. Dasselbe gilt für den Quirl, der für eine einfache Reinigung, mit einfachen Mitteln, wie einer lösbaren Kupplung, von dem Antrieb, beziehungsweise einer Welle des Antriebs entkoppelbar und aus dem Behälter entnehmbar sein kann.

Der Behälterkörper und der Behälterboden können integral ausgebildet sein, wobei die Ausgabevorrichtung ein separates Bauteil sein kann. Alternativ können auch der Behälterkörper und die Ausgabevorrichtung integral ausgebildet sein, wobei der Behälterboden ein separates Bauteil ist, was ein Auseinandernehmen der Vorrichtung besonders einfach gestaltet, da die Ausgabevorrichtung mit dem Behälterkörper dann einfach einteilig von dem Behälterboden entfernt werden und diese beiden Teile einfach gereinigt werden können. In einer weiteren Variante sind Behälterboden und die Ausgabevorrichtung integral ausgebildet und der Behälterkörper ist ein separates Bauteil.

Der Behälter kann außerdem eine Heizeinrichtung aufweisen, die dazu eingerichtet ist, die Flüssigkeit durch Wärmekonduktion von einem Wärmemedium zu erwärmen, wobei das Wärmemedium eine Leitung für Wasserdampf oder eine Leitung für Warmwasser oder eine elektrische Leitung ist. Dies ist besonders einfach umsetzbar, wenn das Wärmemedium in dem Behälterboden angeordnet ist oder es mit diesem zumindest unmittelbar in Wirkverbindung steht. Die Steuerung kann dabei einen Temperatursensor zur Erfassung einer Temperatur der Flüssigkeit umfassen, wobei der erste Zeitraum einer Zeitspanne entspricht, innerhalb der die Temperatur der Flüssigkeit sich bis zu einem vorbestimmten Wert erhöht hat. Die Steuerung kann für eine vorteilhafte Ausgabe der Flüssigkeit aus dem Flüssigkeitsauslass auch so konfiguriert sein, dass sie bei einem relativ längeren gemessenen ersten Zeitraum von einer größeren Menge Flüssigkeit ausgeht und sie den zweiten Zeitraum entsprechend länger einstellt. Dies ist insbesondere für Anwendungsfälle mit viel Flüssigkeit vorteilhaft und ermöglicht eine Automatisierung für unterschiedliche Milchmengen, wodurch die Milchmenge durch einen Benutzer der Vorrichtung freier auswählbar sein kann. Ein Erwärmen, also Erhitzen der Flüssigkeit kann vor dem ersten Zeitraum und/oder während des ersten Zeitraums erfolgen.

Besonders bevorzugt ist die Steuerung dazu konfiguriert, den Antrieb so anzusteuern, dass er den Quirl abhängig von einem Zeitpunkt während des ersten oder zweiten Zeitraums rotieren kann. Hierdurch kann die Flüssigkeit vorteilhaft aufgeschäumt, beziehungsweise möglichst restlos aus dem Behälter austreten, beispielsweise durch eine relativ erhöhte Drehzahl. Alternativ oder zusätzlich kann die Steuerung dazu konfiguriert sein, den Antrieb so anzusteuern, dass er den Quirl abhängig von abhängig von der Temperatur der Flüssigkeit mit unterschiedlichen Geschwindigkeiten rotieren kann, was ein besonders gleichmäßiges Erhitzen der Flüssigkeit bewirkt.

Bei allen Ausführungsformen der Vorrichtung ist es außerdem für eine vereinfachte Reinigung des Quirls und des Behälters vorteilhaft, wenn der Quirl werkzeuglos aus dem Behälter herausnehmbar ist, wobei der Quirl ebenso werkzeuglos von dem Antrieb entkoppelt werden kann.

Bevorzugt ist der Antrieb ein Elektromotor, der Quirl kann aber alternativ auch durch Dampf angetrieben werden, beispielsweise mittels einer mit dem Quirl gekoppelten Turbine, wenn die Vorrichtung an einem Kaffeevollautomaten montiert ist, sodass sie während eines Brühvorgangs von Kaffee entstehenden Wasserdampf energieeffizient verwenden kann.

Die vorliegende Erfindung umfasst außerdem einen Kaffeevollautomaten zur Zubereitung von Kaffeegetränken, mit einem Kaffeeauslass zur Ausgabe von zubereitetem Kaffee in einen Becher und mit einer erfindungsgemäßen Vorrichtung. Die Ausgabevorrichtung weist hierbei eine an den Flüssigkeitsauslass angeschlossene Ausgabeleitung auf, mittels der die Flüssigkeit in den Becher geleitet werden kann, wenn der Quirl in die zweite Richtung rotiert. Dies ermöglicht eine vollautomatisierte Zubereitung von Kaffeegetränken, beziehungsweise von Kaffee mit Milchschaum, wie Cappuccino etc. Der Kaffeevollautomat kann auch zwei erfindungsgemäße Vorrichtungen umfassen, wodurch mehrere Getränke gleichzeitig hergestellt werden können.

Der Kaffeevollautomat kann die erfindungsgemäße Vorrichtung auch so aufweisen, dass deren Steuerung dazu konfiguriert ist, den zweiten Zeitraum automatisiert beginnen zu lassen, sodass er vor, während und/oder nach der Ausgabe des Kaffees beginnt und/oder endet, wobei die Flüssigkeit vor, während und/oder nach der Ausgabe des Kaffees automatisch in den Becher geleitet werden kann.

Gemäß einer besonders vorteilhaften Ausführungsform kann der Behälter werkzeuglos von dem Kaffeevollautomaten abnehmbar sein. Hierdurch wird eine besonders einfache Reinigung des Behälters ermöglicht. Noch einfacher ist dies ermöglicht, wenn der Antrieb hierbei an dem Kaffeevollautomaten fixiert bleibt. Die Vorrichtung sollte bevorzugt also so ausgebildet sein, dass der Quirl und der Behälter in einem Handgriff von dem Kaffeevollautomaten abnehmbar und von dem Antrieb entkoppelbar sind, beispielsweise über eine mechanische oder magnetische Kupplung. Die werkzeuglose Montage des Behälters an dem Kaffeevollautomaten kann insbesondere durch eine Steck- und/oder Raststruktur ermöglicht sein.

Eine von dem Kaffeevollautomaten abnehmbare Ausgestaltung des Behälters ist insbesondere in Kombination mit einer der mehrteiligen Ausbildungen des Behälters vorteilhaft, beispielsweise wenn der Behälter ein- oder zweiteilig und die Ausgabevorrichtung als separates Bauteil ausgebildet ist. Wie erwähnt sollte der Quirl hierbei optimalerweise ebenfalls werkzeuglos aus dem Behälter entnehmbar sein. Der Quirl kann alternativ auch fest an dem Behälter montiert und somit nur von dem Antrieb entkoppelt werden, wenn der Behälter von dem Kaffeevollautomaten abgenommen ist.

Der Kaffeevollautomat umfasst bevorzugt eine Heizeinrichtung, mittels der Wasser zum Brühen von Kaffee erhitzt werden kann, wobei durch die Heizeinrichtung zudem die Flüssigkeit der Vorrichtung zum Aufschäumen von Flüssigkeiten erwärmt werden kann. Dann kann zum Erhitzen des Wassers und der Flüssigkeit die gleiche Heizeinrichtung verwendet werden.

Die vorliegende Erfindung umfasst außerdem ein Verfahren zur Zubereitung von Kaffeegetränken mittels des erfindungsgemäßen Kaffeevollautomaten, das die folgenden Schritte umfasst:
a. Einfüllen von Flüssigkeit in den Behälter der Vorrichtung;
b. Rotieren des Quirls in eine erste Richtung, um die Flüssigkeit aufzuschäumen, wobei die Flüssigkeit nicht aus dem Flüssigkeitsauslass austritt;
c. Rotieren des Quirls in eine zur ersten Richtung gegenläufige zweite Richtung, um die aufgeschäumte Flüssigkeit durch den Flüssigkeitsauslass und die Ausgabeleitung in einen Becher zu leiten; und optional
d. Einfüllen von Kaffee in den Becher und/oder Zugabe von Kakaopulver zu der Milch.

Das Einfüllen der Flüssigkeit in den Behälter kann bis zu dem Übertrittsfüllstand erfolgen. Durch das Rotieren des Quirls in die erste Richtung zum Aufschäumen findet eine Volumenvergrößerung statt, aber aufgrund der Strömungslenkung in dem Behälter wird ein Austreten der zumindest teilweise geschäumten Flüssigkeit an dem Flüssigkeitsauslass verhindert. Erst wenn der Quirl angehalten oder in die gegenläufige zweite Richtung gedreht wird erfolgt die Ausgabe der zumindest teilweise geschäumten Flüssigkeit über den Flüssigkeitsauslass. Dadurch muss kein zusätzliches Ventil an dem Flüssigkeitsauslass vorgesehen werden, der durchgängig offen ist.

Die Schritte können in alphabetischer Reihenfolge erfolgen oder Schritt d kann zeitlich vor Schritt a erfolgen. Schritt b wird bevorzugt für die Dauer des oben beschriebenen ersten und Schritt c für die Dauer des oben beschriebenen zweiten Zeitraums durchgeführt, bevorzugt auch in alphabetischer Reihenfolge.

Schritt d kann auch nach der Beendigung von Schritt b, davor oder gleichzeitig mit Schritt b erfolgen. Insbesondere können die Schritte d und b auch zeitgleich und der Schritt c danach durchgeführt werden, wodurch der Kaffee besonders zeitsparend zubereitet werden kann. Schrott d kann auch nach Schritt c durchgeführt werden, um Flüssigkeit und Kaffee durchzumischen.

Noch bevorzugter kann das Verfahren einen Schritt e umfassen, in dem die Flüssigkeit erwärmt wird, wobei Schritt e vor und/oder während Schritt b durchgeführt wird.

Die vorliegende Erfindung wird nachfolgend anhand mehrerer Zeichnungen näher beschrieben. Es zeigen:
- Fig. 1: einen erfindungsgemäßen Kaffeevollautomaten mit der erfindungsgemäßen Vorrichtung zum Aufschäumen von Milch,
- Fig. 2: einen Querschnitt der erfindungsgemäßen Vorrichtung aus Fig. 1,
- Fig. 3a: einen Querschnitt einer Ausgabevorrichtung der Vorrichtung aus Fig. 2,
- Fig. 3b: einen Querschnitt der Ausgabevorrichtung senkrecht zu dem aus Fig. 3a,
- Fig. 4a: eine Draufsicht auf einen Behälterboden eines Behälters einer Ausführungsform der Vorrichtung aus Fig. 2,
- Fig. 4b: eine Draufsicht auf einen Behälterkörper mit Ausgabevorrichtung nach der Ausführungsform Vorrichtung aus Fig. 4a,
- Fig. 5: eine schematische Ansicht eines erfindungsgemäßen Kaffeevollautomaten gemäß einer Ausführungsform.

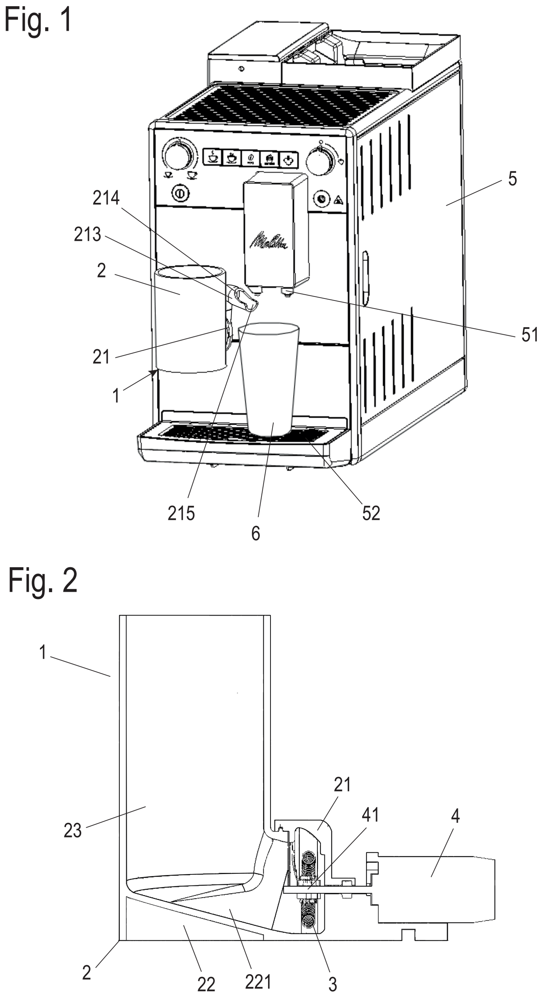

In Fig. 1 ist ein erfindungsgemäßer Kaffeevollautomat 5 zur Zubereitung von Kaffeegetränken mit einer erfindungsgemäßen Vorrichtung 1 nach einer der oben beschriebenen Ausführungen zum Aufschäumen von Flüssigkeit, insbesondere Milch oder eine milchhaltige Flüssigkeit, für den Kaffee dargestellt. Die Vorrichtung 1 weist einen Behälter 2 für die Flüssigkeit auf, der eine Ausgabevorrichtung 21 umfasst. Mittels des Kaffeevollautomaten 5 kann Kaffee aufgebrüht und aus einem Kaffeeauslass 51 in einen hier darunter befindlichen Becher 6, beziehungsweise eine Tasse etc. ausgegeben werden. Die Ausgabevorrichtung 21 ist hier zwischen dem Behälter 2 und dem Rest des Kaffeevollautomaten 5 angeordnet und umfasst eine Ausgabeleitung 213, die mit einem nicht sichtbaren Flüssigkeitsauslass der Ausgabevorrichtung 21 in Verbindung steht, wobei Flüssigkeit aus dem Behälter 2 durch den Flüssigkeitsauslass und die Ausgabeleitung 213, aus einer Ausgabeöffnung 214 in den Becher 6 ausgegeben werden kann. Hier umfasst die Ausgabeleitung 213 optional außerdem einen Ablaufabschnitt 215, der einem offenen Abschnitt der Ausgabeleitung 213 entspricht und der es einem Benutzer vereinfacht, den Becher 6 zur Ausgabe der Flüssigkeit passend zu positionieren, also eine Becheröffnung so unter der Ausgabeleitung 213 und dem Kaffeeauslass 51 anzuordnen, dass sie von der Flüssigkeit und dem aufgebrühten Kaffee getroffen werden kann, wodurch das Kaffeegetränk entsteht. Eine Ausführung der Vorrichtung 1 vollständig separat von dem Kaffeevollautomaten 5 ist auch denkbar.

Fig. 2 zeigt einen Querschnitt der Vorrichtung 1 aus Fig. 1, wobei der Behälter 2 neben der Ausgabevorrichtung 21 einen Behälterboden 22 und einen Behälterkörper 23 aufweist, in die die Flüssigkeit eingefüllt werden kann. Die Ausgabevorrichtung 21 ist hier ein separates Bauteil, sie kann aber auch einteilig mit dem Behälterboden 22 oder dem Behälterkörper 23 ausgebildet sein. Der Behälterboden 22 weist eine in Richtung eines in der Ausgabevorrichtung 21 angeordneten Quirls 3 zum Aufschäumen der Flüssigkeit ausgerichtete Trichterform 221 oder Neigung auf, mittels der die Flüssigkeit in Richtung der Ausgabevorrichtung 21 geleitet ist.

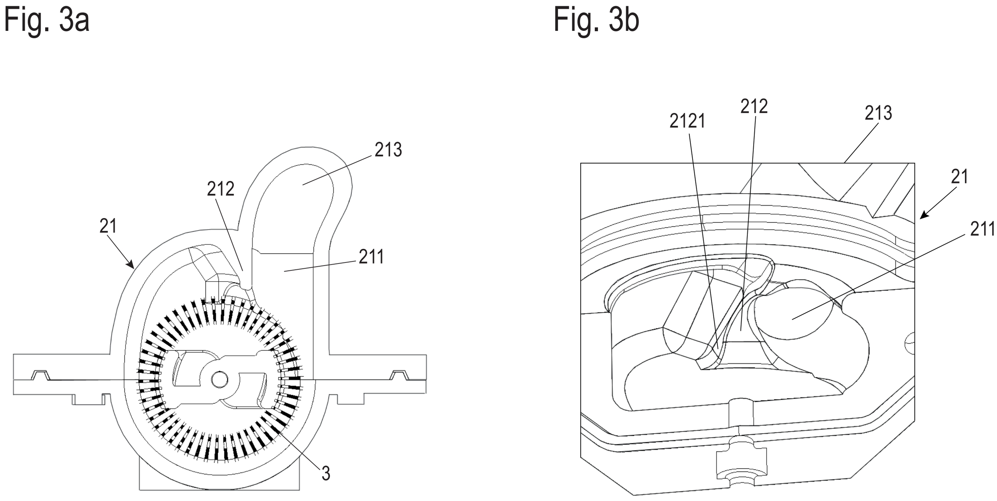

Bevorzugt ist der Quirl 3 so ausgerichtet, dass er eine horizontal ausgerichtete Drehachse aufweist, wodurch die Tiefe der Vorrichtung 1 (hier entsprechend der Breite der Vorrichtung 1 in horizontaler Richtung) geringer sein kann, als mit einer vertikalen Ausrichtung der Drehachse. Bei einer solchen könnte die Tiefe der Vorrichtung 1 zwar durch eine andere Anordnung des Antriebs 4 verringert werden, jedoch ist der Antrieb 4 in Fig. 1 im Wesentlichen innerhalb des Kaffeevollautomaten 5 angeordnet, sodass sich durch die dargestellte Anordnung die Tiefe des Kaffeevollautomaten 5 insgesamt verringert. Die hieraus folgende (im Wesentlichen vertikale) Anordnung des Quirls 3 ist auch besonders vorteilhaft für die zu Fig. 3a und 3b konkreter beschriebene Ausgabe von Milch.

Der Quirl 3 ist über eine Achse 41 mit einem Antrieb 4, hier bevorzugt ein Elektromotor, gekoppelt, von der er vorzugsweise werkzeuglos abnehmbar sein kann. In dieser Variante ist dies durch Aufstecken des Quirls 3 auf die Achse 41 gewährleistet, es sind aber auch beispielsweise magnetische Kupplungen mit der Achse 41 und somit mit dem Antrieb 4 oder andere Varianten, die zu demselben Ergebnis der werkzeuglosen Abnehmbarkeit führen, denkbar.

Die Ausgabevorrichtung 21, der Behälterboden 22 und/oder der Behälterkörper 23 können bevorzugt werkzeuglos voneinander, jedoch berücksichtigend möglicherweise integrale Ausführungen dieser Teile, getrennt werden und sind ebenso werkzeuglos von dem Antrieb 4 trennbar.

Fig. 3a zeigt einen Querschnitt der Ausgabevorrichtung 21 des Behälters 2 der Vorrichtung 1 aus Fig. 2 , wobei der oben erwähnte Flüssigkeitsauslass 211 hier sichtbar ist. Der Quirl 3 kann mittels des Antriebs 4 aus Fig. 2 in eine erste Richtung, hier im Uhrzeigersinn, rotiert werden, wodurch die Flüssigkeit mittels des Quirls 3 in Bewegung versetzt wird, um die Flüssigkeit aufzuschäumen, beziehungsweise um Milchschaum herzustellen. Der Flüssigkeitsauslass 211 ist so ausgebildet, dass die Flüssigkeit nicht aus dem Flüssigkeitsauslass 211 austreten kann, wenn der Behälter 2 weniger als bis zu einem Übertrittsfüllstand, vorzugsweise etwa 120 bis 140 ml bei einem Behältervolumen von etwa 350 bis 450 ml, mit Flüssigkeit gefüllt ist und der Quirl 3 in die erste Richtung rotiert. Die Flüssigkeit wird hier rotatorisch in Bewegung an dem Auslass 211 gesetzt.

Der Quirl 3 kann außerdem in eine zweite Richtung rotiert werden, hier entgegengesetzt der ersten Richtung, entgegen des Uhrzeigersinns. Der Flüssigkeitsauslass 211 ist so angeordnet, dass die Flüssigkeit aus dem Flüssigkeitsauslass 211 austritt, wenn der Quirl 3 in die zweite Richtung rotiert. Hier geschieht dies durch Fliehkräfte, beziehungsweise Zentrifugalkräfte, also dadurch, dass die zunächst rotatorisch in Bewegung gesetzte Flüssigkeit in Richtung des Auslasses 211 letztendlich geradlinig beschleunigt wird, und so den Bereich des Quirls 3 verlässt und durch den Auslass 211 austritt, wodurch die Flüssigkeit hier in die Ausgabeleitung 213 geleitet wird, sodass sie, beziehungsweise der Milchschaum, wie zu Fig. 1 beschrieben, in den dort dargestellten Becher 6 ausgegeben werden kann. Dies kann vor oder nach der Ausgabe von Kaffee erfolgen, um ein Kaffeegetränk mit Milchschaum zu schaffen. Zur besonderen Beschleunigung kann der Milchschaum auch während der Ausgabe von Kaffee ausgegeben werden.

Die Vorrichtung 2 umfasst eine Steuerung, die dazu eingerichtet ist, den Antrieb 4 und somit den Quirl 3 zu steuern und die auch eine Steuerung sein kann, die dazu eingerichtet ist, den Kaffeevollautomaten 5 ansonsten zu steuern, beziehungsweise die zumindest dazu eingerichtet ist, mit einer solchen Steuerung zu kommunizieren. Um das Aufschäumen der Flüssigkeit und deren Ausgabe zu automatisieren, ist die Steuerung dazu konfiguriert, den Antrieb 4 so zu steuern, dass der Quirl 3 zuerst für einen ersten Zeitraum in die erste Richtung rotiert und dass er anschließend, wenn die Flüssigkeit aufgeschäumt ist, für einen zweiten Zeitraum in die zweite Richtung rotiert. Der erste Zeitraum kann bei dem Vollautomaten 5 nach Fig. 1 während der Ausgabe, beziehungsweise des Aufbrühens des Kaffees ablaufen.

Die Ausgabevorrichtung 21 umfasst hier optional ein Sperrelement 212, bevorzugt einen Sperrsteg, der so angeordnet ist, dass er den Strömungsweg der Flüssigkeit blockiert oder umleitet, wenn der Quirl 3 in die erste Richtung rotiert. Das Sperrelement 212 umfasst hier vorzugsweise eine Sperroberfläche 2121, die eine im Wesentlichen in Richtung des Strömungswegs der Milch, wenn der Quirl 3 im Uhrzeigersinn rotiert, ausgerichtete Schräge ist.

Fig. 3b zeigt einen Querschnitt senkrecht zu dem Aus Fig. 3a, wobei hier besonders gut sichtbar ist, wie die Flüssigkeit bei einem Rotieren des Quirls 3 in die erste Richtung über die Sperroberfläche 2121 an dem Sperrelement 212 vorbei und somit an dem Auslass 211 vorbeigeführt ist und wie sie bei einem Drehen des Quirls 3 in die andere Richtung aus dem Auslass 211 austritt.

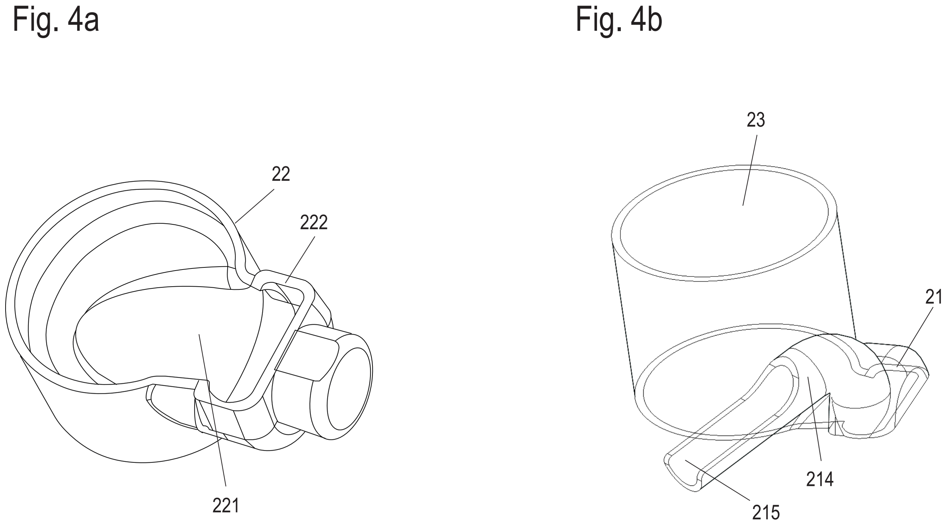

Wie oben erwähnt, kann der Behälter 2 aus den vorgehenden Figuren ein- oder mehrteilig ausgebildet sein. Fig. 4a und 4b zeigen eine Ausbildung des Behälters 2, bei der der Behälterboden 22 ein separates Bauteil ist und bei der die Ausgabevorrichtung 21 und der Behälterkörper 23 integral als ein weitere Bauteil ausgebildet sind. Der Behälterboden 22 ist von dem Kaffeevollautomaten 5 und dem Antrieb 4 abnehmbar und die Ausgabevorrichtung 21 und der Behälterkörper 23 können abnehmbar auf diesen aufgesteckt sein, wobei die Ausgabevorrichtung 21 auf einen Halteabschnitt 222 des Behälterbodens 22 aufsteckbar ist.

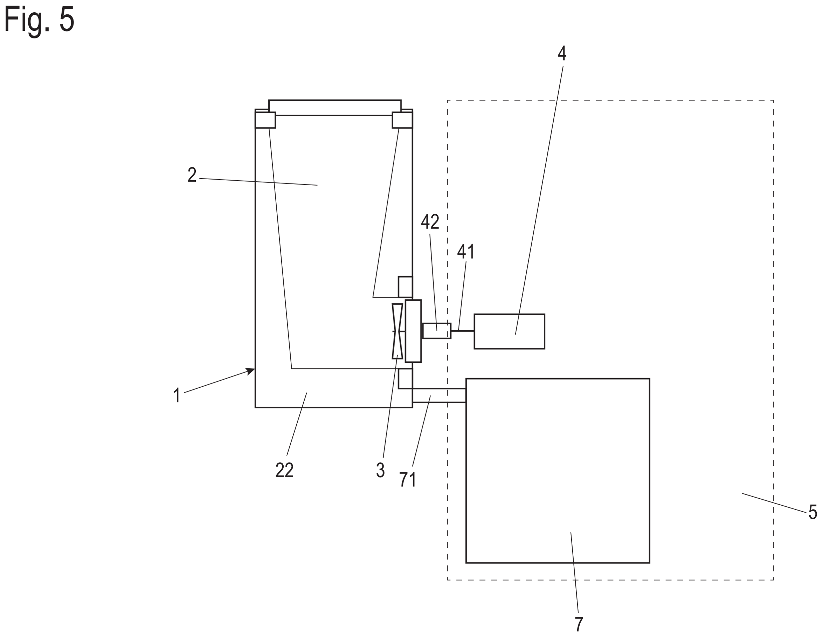

Fig. 5 zeigt eine schematische Ansicht des Kaffeevollautomaten 5 aus Fig. 1, wobei hier sichtbar ist, dass der Antrieb 4 innerhalb eines Gehäuses des Kaffeevollautomaten 5 angeordnet ist. Hier ist in einer weiteren Ausführungsform eine Alternative Kupplung 42 zwischen dem Quirl 3 und der Achse 41 vorgesehen, mittels eines Magneten. Außerdem ist hier optional alternativ oder zusätzlich noch eine Heizeinrichtung vorgesehen, die innerhalb des Behälterbodens 22 angeordnet ist und die die Flüssigkeit durch Konduktion von Wärme von einem Wärmemedium 71 aufwärmen kann. Das Wärmemedium 71 kann eine elektrische Leitung sein, die Flüssigkeit also durch joulesche Wärme aufheizen. Alternativ kann das Wärmemedium auch eine Leitung für Wasserdampf oder warmes Wasser sein, dass in einem Wärmeerzeuger 7 erzeugt wird, hier dann für gewöhnlich durch eine elektrische Leitung, einen Tauchsieder, Durchlauferhitzer oder Ähnliches.

### Bezugszeichenliste

- 1: Vorrichtung
- 2: Behälter
- 21: Ausgabevorrichtung
- 211: Flüssigkeitsauslass
- 212: Sperrelement
- 2121: Sperroberfläche
- 213: Ausgabeleitung
- 214: Ausgabeöffnung
- 215: Ablaufabschnitt
- 22: Behälterboden
- 221: Trichterform
- 222: Halteabschnitt
- 23: Behälterkörper
- 3: Quirl
- 4: Antrieb
- 41: Antriebswelle
- 42: Kupplung
- 5: Kaffeevollautomat
- 51: Kaffeeauslass
- 6: Becher
- 7: Wärmeerzeuger
- 71: Wärmemedium

## Patentansprüche

1. Vorrichtung (1) zum Aufschäumen von Flüssigkeiten,
wobei die Vorrichtung (1) einen Behälter (2) zur Aufnahme von Flüssigkeit und einen Antrieb (4) aufweist, der dazu eingerichtet ist, einen in dem Behälter (2) angeordneten Quirl (3) anzutreiben;
wobei der Quirl (3) mittels des Antriebs (4) rotierbar ist und die Flüssigkeit mittels des Quirls (3) in Bewegung versetzt wird, wenn der Quirl (3) in eine erste Richtung rotiert wird, um die Flüssigkeit aufzuschäumen;
wobei der Behälter (2) eine Ausgabevorrichtung (21) und einen Behälterboden (22) aufweist,
wobei die Ausgabevorrichtung (21) einen Flüssigkeitsauslass (211) umfasst, der so ausgebildet ist, dass die Flüssigkeit nicht aus dem Flüssigkeitsauslass (211) austreten kann, wenn der Behälter (2) weniger als bis zu einem Übertrittsfüllstand mit Flüssigkeit gefüllt ist, und wenn der Quirl (3) in die erste Richtung rotiert bei Volumenzunahme der Flüssigkeit durch Aufschäumen diese nicht aus dem Flüssigkeitsauslass (211) austritt, **dadurch gekennzeichnet, dass** der Flüssigkeitsauslass (211) so angeordnet ist, dass die Flüssigkeit aus dem Flüssigkeitsauslass (211) austritt, wenn der Quirl (3) in eine zur ersten Richtung gegenläufige zweite Richtung rotiert.

2. Vorrichtung (1) nach Anspruch 1, **dadurch gekennzeichnet, dass** in dem Behälter (2) neben dem Flüssigkeitsauslass (211) ein Sperrelement (212) angeordnet ist,
wobei das Sperrelement (212) so angeordnet ist, dass es den Strömungsweg der Flüssigkeit blockiert, sodass sie nicht aus dem Flüssigkeitsauslass (211) austreten kann, wenn der Quirl (3) in die erste Richtung rotiert,
wobei das Sperrelement (212) außerdem so angeordnet ist, dass die Flüssigkeit an dem Sperrelement (212) vorbei aus dem Flüssigkeitsauslass (211) austritt, wenn der Quirl (3) in die zweite Richtung rotiert.

3. Vorrichtung (1) nach Anspruch 1 oder 2, **dadurch gekennzeichnet, dass** der Antrieb (4) eine Steuerung umfasst, die dazu eingerichtet ist, den Antrieb (4) und somit den Quirl (3) zu steuern und die außerdem dazu eingerichtet ist, den Antrieb (4) so zu steuern, dass der Quirl (3) zuerst für einen ersten Zeitraum in die erste Richtung rotiert und dass er anschließend, wenn die Flüssigkeit aufgeschäumt ist, für einen zweiten Zeitraum in die zweite Richtung rotiert.

4. Vorrichtung (1) nach Anspruch 3, **dadurch gekennzeichnet, dass** die Steuerung dazu eingerichtet ist, dass sie den zweiten Zeitraum automatisiert beginnen kann, und/oder die dazu eingerichtet ist, dass sie den zweiten Zeitraum nach einer Eingabe durch einen Benutzer beginnen kann.

5. Vorrichtung (1) nach einem der vorgehenden Ansprüche, **dadurch gekennzeichnet, dass** der Behälterboden (22) in Richtung des Quirls (3) geneigt oder trichterförmig ausgebildet ist.

6. Vorrichtung (1) nach einem der vorgehenden Ansprüche, **dadurch gekennzeichnet, dass** eine Drehachse des Quirls (3) horizontal ausgerichtet ist.

7. Vorrichtung (1) nach einem der Ansprüche 5 oder 6, **dadurch gekennzeichnet, dass** der Behälter (2) einen über dem Behälterboden (22) angeordneten Behälterkörper (23) umfasst, wobei der Behälterboden (22), der Behälterkörper (23) und/oder die Ausgabevorrichtung (21) integral oder als einzelne Bauteile ausgebildet sein können.

8. Vorrichtung (1) nach einem der Ansprüche 5 bis 7, **dadurch gekennzeichnet, dass** der Behälterkörper (23) und der Behälterboden (22) integral ausgebildet sind und die Ausgabevorrichtung (21) ein separates Bauteil ist oder dass der Behälterkörper (23) und die Ausgabevorrichtung (21) integral ausgebildet sind und der Behälterboden (22) ein separates Bauteil ist oder dass der Behälterboden (22) und die Ausgabevorrichtung (21) integral ausgebildet sind und der Behälterkörper (23) ein separates Bauteil ist.

9. Vorrichtung (1) nach einem der vorgehenden Ansprüche, **dadurch gekennzeichnet, dass** der Behälter (2) außerdem eine Heizeinrichtung aufweist, die dazu eingerichtet ist die Flüssigkeit durch Wärmekonduktion von einem Wärmemedium (71) zu erwärmen, wobei das Wärmemedium (71) eine Leitung für Wasserdampf oder eine Leitung für Warmwasser oder eine elektrische Leitung ist.

10. Vorrichtung (1) nach Anspruch 9, **dadurch gekennzeichnet, dass** die Steuerung einen Temperatursensor zur Erfassung einer Temperatur der Flüssigkeit umfasst und der erste Zeitraum einer Zeitspanne entspricht, innerhalb der die Temperatur der Flüssigkeit sich bis zu einem vorbestimmten Wert erhöht hat.

11. Vorrichtung (1) nach einem der Ansprüche 4 bis 7 oder 9, **dadurch gekennzeichnet, dass** die Steuerung dazu konfiguriert ist, den Antrieb (4) so anzusteuern, dass er den Quirl (3) abhängig von einem Zeitpunkt während des ersten oder zweiten Zeitraums und/oder abhängig von der Temperatur der Flüssigkeit mit unterschiedlichen Geschwindigkeiten rotieren kann.

12. Kaffeevollautomat (5) zur Zubereitung von Kaffeegetränken, mit einem Kaffeeauslass (51) zur Ausgabe von zubereitetem Kaffee in einen Becher (6) und mit einer Vorrichtung (1) nach einem der vorgehenden Ansprüche, wobei die Ausgabevorrichtung (21) eine an den Flüssigkeitsauslass (211) angeschlossene Ausgabeleitung (213) umfasst, mittels der die Flüssigkeit in den Becher (6) geleitet werden kann, wenn der Quirl (3) in die zweite Richtung rotiert.

13. Kaffeevollautomat nach Anspruch 11, wobei die Vorrichtung (1) einer Vorrichtung (1) nach einem der Ansprüche 5 bis 10 entspricht und die Steuerung dazu konfiguriert ist, den zweiten Zeitraum automatisiert so beginnen zu lassen, dass er vor, während oder nach der Ausgabe des Kaffees beginnt und/oder endet, sodass die Flüssigkeit vor, während und/oder nach der Ausgabe des Kaffees automatisch in den Becher (6) geleitet wird, wenn der Quirl (3) in die zweite Richtung rotiert.

14. Kaffeevollautomat (5) nach Anspruch 12 oder 13, wobei der Kaffeevollautomat eine Heizeinrichtung umfasst, mittels der Wasser zum Brühen von Kaffee erhitzt werden kann und durch die Heizeinrichtung zudem die Flüssigkeit der Vorrichtung zum Aufschäumen von Flüssigkeiten zu erwärmen.

15. Verfahren zur Zubereitung von Kaffeegetränken oder heißer Schokolade mit aufgeschäumter Flüssigkeit mittels eines Kaffeevollautomaten (5) nach einem der Ansprüche 12 bis 14, das folgende Schritte umfasst:
a. Einfüllen von Flüssigkeit in den Behälter der Vorrichtung (1);
b. Rotieren des Quirls (3) in die erste Richtung, um die Flüssigkeit aufzuschäumen, wobei die Flüssigkeit nicht aus dem Flüssigkeitsauslass (211) austritt;
c. Rotieren des Quirls (3) in die zweite Richtung, um die aufgeschäumte Flüssigkeit durch den Flüssigkeitsauslass (211) und die Ausgabeleitung (213) in einen Becher (6) zu leiten;
d. Einfüllen von Kaffee in den Becher (6).
